# EUROPÄISCHE PATENTSCHRIFT

(11) **EP 2 225 586 B1**
(45) Veröffentlichungstag und Bekanntmachung des Hinweises auf die Patenterteilung: **21.09.2016**
(21) Anmeldenummer: 08861525.7
(22) Anmeldetag: 21.10.2008
(51) Int. Cl.: G01S 17/42, G01C 15/00

(54) **ENTFERNUNGSMESSVORRICHTUNG SOWIE SYSTEM**
DISTANCE MEASURING DEVICE AND SYSTEM
DISPOSITIF DE MESURE D'ÉLOIGNEMENT, ET SYSTÈME

(30) Priorität: 19.12.2007 DE 102007061384
(43) Veröffentlichungstag der Anmeldung: 08.09.2010
(73) Patentinhaber: Robert Bosch GmbH, 70442 Stuttgart (DE)
(72) Erfinder: VISEL, Benjamin, 71701 Schwieberdingen (DE); MARX, Klaus, 70563 Stuttgart (DE); SIEGLE, Henrik, 71229 Leonberg (DE); STELLMANN, Georg, 71642 Ludwigsburg (DE); PLATZER, Joachim, 71686 Remseck-hochberg (DE); JACKISCH, Sebastian, 71638 Ludwigsburg (DE); SCHNEIDER, Marcus, 71642 Ludwigsburg (DE)
(86) Internationale Anmeldenummer: PCT/EP2008/064181
(87) Internationale Veröffentlichungsnummer: WO 2009/077237

(56) Entgegenhaltungen:
- EP-A- 1 669 776
- EP-A- 1 710 602
- EP-A- 1 748 309
- EP-A2- 1 273 882
- DE-A1- 10 016 309
- DE-A1-102005 004 321
- US-A1- 2006 066 836
- MAEKYNEN A J ET AL: "TRACKING LASER RADAR FOR 3-D SHAPE MEASUREMENTS OF LARGE INDUSTIAL OBJECTS BASED ON TIME-OF-FLIGHT LASER RANGEFINDING AND POSITION-SENSITIVE DETECTION TECHNIQUES" 1. Februar 1994 (1994-02-01), IEEE TRANSACTIONS ON INSTRUMENTATION AND MEASUREMENT, IEEE SERVICE CENTER, PISCATAWAY, NJ, US, PAGE(S) 40 - 48 , XP000460026 ISSN: 0018-9456 Zusammenfassung Spalten 1-5

## Beschreibung

### Stand der Technik

Die Erfindung betrifft eine Entfernungsmessvorrichtung gemäß dem Oberbegriff des Anspruchs 1 sowie ein System mit einer Entfernungsmessvorrichtung und einer Logikeinheit gemäß Anspruch 14.

Aus der DE 100 16 309 A1 ist es bekannt, einer Entfernungsmessvorrichtung einen Winkelsensor zuzuordnen, mit dem der Aussendewinkel eines Lichtmesssignals zu einem Vergleichswert bestimmbar ist. Dadurch ist es möglich, bestimmte Winkel und/oder Steigungen von Wänden, Böden, Decken zu ermitteln.

Die bekannte Entfernungsmessvorrichtung hat sich bewährt. Es bestehen jedoch Bestrebungen, die Funktionalität von Entfernungsmessvorrichtungen zu erweitern.

Aus der EP 1669776 ist ein handhaltbares Vermessungsgerät mit einem Entfernungsmesser bekannt, bei dem eine Lagedetektionseinheit es ermöglicht, für jede Entfernungsmessung die jeweilige Position des Vermessungsgerätes und die jeweilige Ausrichtung des Entfernungsmessers zu erfassen. Durch diese verknüpfte Erfassung können alle Entfernungsmessungen zu Aufpunkten in Form einer Spur aufgenommen und miteinander korreliert werden, so dass komplexere Auswertungen, wie beispielweise die Messung unzugänglicher Objekte oder die Bestimmung der Planarität einer Fläche ermöglicht ist.

Aus der EP 1 710 602 A1 ist ein Messsystem zur Bestimmung von sechs Freiheitsgraden eines Gegenstandes bekannt.

Die US 206/0066836 A1 offenbart eine Absolutentfernungsmesseinrichtung zur Messung eines bewegten Rückstrahlers.

Aus der Veröffentlichung *"*8096 IEEE Transactions on Instrumentation and Measurement 43(1994)", Seite 40ff ist ein Laser-Radar-System für 3d-Messungen bekannt, welches auf einem Flugzeit-Entfernungsmesssystem und positionssensitiver Detektionstechnik beruht, und die Vermessung großer industrieller Objekte ermöglicht.

### Offenbarung der Erfindung

### Technische Aufgabe

Der Erfindung liegt daher die Aufgabe zugrunde, eine Entfernungsmessvorrichtung mit einer erweiterten Funktionalität vorzuschlagen. Ferner besteht die Aufgabe darin, ein entsprechend optimiertes System mit einer Entfernungsmessvorrichtung anzugeben.

### Technische Lösung

Diese Aufgabe wird hinsichtlich der Entfernungsmessvorrichtung mit den Merkmalen des Anspruchs 1 und hinsichtlich des Systems mit den Merkmalen des Anspruchs 14 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, der insbesondere als Handgerät ausgebildeten, Entfernungsmessvorrichtung Mittel zuzuordnen, die derart ausgebildet sind, dass mit diesen Raumpunkte, zu denen die Entfernung mit Hilfe von an sich bekannten Messmitteln bestimmt wird, in einem zweidimensionalen oder dreidimensionalen, insbesondere raumfesten und/oder geodätischen, Koordinatensystem anordnenbar sind. Anders ausgedrückt liegt der Erfindung der Gedanke zugrunde, Mittel vorzusehen, die derart ausgebildet sind, dass mit diesen jedem Raumpunkt, zu dem mit Hilfe der Messmittel die Entfernung bestimmt wird, Flächenkoordinaten und/oder Raumkoordinaten in einem zweidimensionalen oder dreidimensionalen, vorzugsweise raumfesten, einheitlichen Koordinatensystem zuordnenbar sind. Durch die erfindungsgemäße Ausbildung der Entfernungsmessvorrichtung wird deren Funktionalität erheblich erweitert. So ist es auf einfache Weise möglich, durch eine berührungslose Messung eine zweidimensionale Flächengeometrie oder bevorzugt eine dreidimensionale Raumgeometrie zu ermitteln, ohne dass es notwendig wäre, die einzelnen Messpunkte von Hand aufzutragen. Mit einer nach dem Konzept der Erfindung ausgebildeten Entfernungsmessvorrichtung kann zudem die relative Lage von Raumpunkten zueinander bestimmt werden. Aus den ermittelten 2D- oder 3D-Koordinaten lassen sich ferner Abstände, Flächen und Volumina bestimmen sowie die Orientierung einzelner Raumelemente zueinander. Durch die Abstandsmessung mit Hilfe der Messmittel kann der Benutzer auch die Koordinaten von schwer zugänglichen Punkten bestimmen und durch die freie Bewegung im Raum auch von Punkten, die auf keiner direkten Sichtlinie relativ zueinander angeordnet sind. Die Messmittel zum Bestimmen von Entfernungen zu Raumpunkten umfassen bevorzugt mindestens eine Sendeeinheit zum Aussenden eines Messsignals, beispielsweise eines Lichtsignals, vorzugsweise eines Lasersignals, eines Ultraschallsignals und/oder eines Radarsignals und mindestens eine Empfangseinrichtung zum Empfangen des ausgesendeten und an einem Raumpunkt reflektierten Messsignals. Über eine Laufzeitmessung und/oder über interferometrische Methoden kann von den Messmitteln die Entfernung zwischen einem Bezugspunkt der Entfernungsmessvorrichtung, vorzugsweise zwischen einer Stirnseite der Entfernungsmessvorrichtung, und einem beliebigen Raumpunkt, bestimmt werden. Besonders bevorzugt ist eine Ausführungsform der Entfernungsmessvorrichtung, bei der diese eine Anzeigeeinrichtung, insbesondere ein Display, aufweist, auf dem beispielsweise die ermittelten Koordinaten und/oder ein graphisches zweidimensionales oder dreidimensionales Raummodel anzeigbar sind.

Gemäß einer besonders bevorzugten Ausbildung der Erfindung erfolgt die Bestimmung über Flächenkoordinaten und/oder der Raumkoordinaten eines Raumpunktes unter Berücksichtigung der Position und/oder Winkellage der Entfernungsmessvorrichtung in der Fläche oder im Raum zum Zeitpunkt der Entfernungsbestimmung, also zum Messzeitpunkt. Anders ausgedrückt ist zum Messzeitpunkt die aktuelle Position und/oder Winkellage der Entfernungsmessvorrichtung in der Fläche oder im Raum (absolut oder relativ zu einer Startposition und/oder Startwinkellage) bekannt, so dass unter Einbeziehung der gemessenen Entfernung zum Raumpunkt auf einfache Weise die Koordinaten (Flächenkoordinaten oder Raumkoordinaten) des Raumpunktes in einem einheitlichen Koordinatensystem bestimmbar sind. Hierzu werden die Positions- und/oder Winkellagendaten mit den Entfernungsmessdaten (insbesondere vektoriell) verknüpft und so die Raumkoordinaten erhalten.

In Weiterbildung der Erfindung ist mit Vorteil vorgesehen, dass die Mittel zur Bestimmung der Flächenkoordinaten und/oder der Raumkoordinaten von Raumpunkten Sensormittel umfassen, die derart ausgebildet sind, dass mit ihnen die Position und/oder die Winkellage der Entfernungsmessvorrichtung in einer Fläche oder im dreidimensionalen Raum, insbesondere relativ zu mindestens einem Vergleichswert, oder absolut, erfassbar sind. Bei dem Vergleichswert handelt es sich beispielsweise um einen Startwert (Initialisierungswert), der bei der ersten Entfernungsmessung vorgegeben wird bzw. eingestellt ist. Besonders bevorzugt sind die Sensormittel derart ausgebildet, dass mit ihnen der Betrag und/oder die Richtung einer translatorischen und/oder rotatorischen Positions- und/oder Winkellageänderung der Entfernungsmessvorrichtung bestimmbar sind. Auf diese Weise ist durch eine Integration der Positions- und/oder Winkellageänderungen über die Zeit die jeweils aktuelle Position und/oder Winkellage der Entfernungsmessvorrichtung und damit des ausgesendeten Messsignals bestimmbar.

Zum Bestimmen der Koordinaten mehrerer Raumpunkte wird bevorzugt wie folgt vorgegangen: Zunächst wird, ausgehend von einer Startposition und einer Startwinkellage (Vergleichswerte), die Entfernung zu einem ersten Raumpunkt, vorzugsweise mit Hilfe eines Laser-, Ultraschall- oder Radarmesssignals, bestimmt, so dass der Abstand der Entfernungsmessvorrichtung zum Messpunkt, d. h. zum Raumpunkt, bekannt ist. Dabei stellt die aktuelle Startposition und/oder Startwinkellage jeweils einen Vergleichswert dar. Daraufhin wird die Position und/öder Winkellage der Entfernungsmessvorrichtung geändert und ein zweiter Raumpunkt anvisiert, zu dem dann die Entfernung gemessen wird. Mit Hilfe der Sensormittel wird die position und/oder Winkellage der Entfernungsmessvorrichtung zum Messzeitpunkt, insbesondere relativ zu der Startposition und/oder Startwinkellage also zu einem Vergleichswert, ermittelt. Unter Berücksichtigung der gemessenen Entfernung und der gemessenen Position und/oder Winkellage der Entfernungsmessvorrichtung lassen sich dann die Koordinaten des Raumpunktes bestimmen. Zur Bestimmung der Koordinaten eines weiteren Raumpunktes wird dann analog vorgegangen und es werden entweder wieder die Startposition und/oder Startwinkellage oder alternativ die zuletzt bestimmte Position und/oder Winkellage der Entfernungsmessvorrichtung als Vergleichswerte zur Ermittlung der neuen Positions- und/oder Winkellage herangezogen. Auf Basis der ermittelten Flächen und/oder Raumkoordinaten der Raumpunkte kann dann, entweder von der Entfernungsmessvorrichtung oder von einer externen Logikeinheit, ein 2D-oder 3D-CAD-Modell erstellt werden.

Insbesondere dann, wenn mit Hilfe der Messmittel eine (quasi-) kontinuierliche Abstands- bzw. Entfernungsmessung möglich ist, können sehr schnell viele Raumpunkte vermessen und bei Bedarf zu diesen Koordinaten bestimmt werden. Beispielsweise ist es möglich, bei der Bewegung der Entfernungsmessvorrichtung von einer Position und/oder Winkellage zur nächsten Position und/oder Winkellage den Abstandsmessstrahl entlang einer Raumkante zu führen und dadurch eine Vielzahl von Koordinaten der Raumkante zu erlagen.

Zum Bestimmen von Koordinaten eines Raumpunktes ist es auch möglich, dass die Entfernungsmessvorrichtung unmittelbar an den Raumpunkt angelegt wird, die Entfernung also gleich null ist. Bevorzugt ist jedoch eine Vorgehensweise, bei der ein Bestimmen von zweidimensionalen oder dreidimensionalen Koordinaten eines Raumpunktes mit Abstand der Entfernungsmessvorrichtung zu dem Raumpunkt erfolgt.

In Weiterbildung der Erfindung ist mit Vorteil vorgesehen, dass die Sensormittel eine Inertialsensorik zum Erfassen einer Positions- und/oder Winkellagenänderung umfassen. Dabei ist mit Vorteil eine Kalibrierung und/oder Initialisierung der Inertialsensorik am Lot und/oder an einem Stützsignal möglich. Bevorzugt ist eine Ausführungsform der Inertialsensorik, bei der diese die Position und/oder Winkellage der Entfernungsmessvorrichtung ab Initialisierung in einem vorrichtungseigenen Koordinatensystem verfolgt und gleichzeitig oder zu einem späteren Zeitpunkt die erfassten Koordinaten in ein raumfestes Koordinatensystem überträgt, d. h. umrechnet.

Besonders bevorzugt ist eine Ausführungsform der Erfindung, bei der die Sensormittel mindestens einen, insbesondere dreiachsigen, Beschleunigungssensor und/oder mindestens einen, vorzugsweise dreiachsigen, Drehratensensor umfassen. Mit Hilfe eines Drehratensensors ist die Drehgeschwindigkeit um mindestens eine Achse bestimmbar, wobei der gesuchte Drehwinkel durch eine zeitliche Integration der Drehratenmesswerte bestimmbar ist. Da ein Drehratensensor prinzipbedingt einen gewissen Systemfehler (Offset) aufweist, ist es vorteilhaft, den Drehratenoffset des mindestens einen Drehratensensors zu bestimmten Zeitpunkten zu ermitteln, zu speichern und bei den Berechnungen zur Ermittlung der Winkellage und/oder der zweidimensionalen oder dreidimensionalen Koordinaten des Raumpunktes zu berücksichtigen. Die Offset-Ermittlung kann beispielsweise während eines Entfernungsmessvorgangs erfolgen, da hierbei die Entfernungsmessvorrichtung mit Vorteil ruhig gehalten wird. Vorteilhaft ist, eine Entfernungsmessung dem Benutzer erst dann als "gültig" zu melden, wenn die gemessene Drehrate für einige Zeit, beispielsweise für eine Sekunde, konstant geblieben ist. Dadurch wird sichergestellt, dass die verbleibende gemessene Drehrate den Offset des Drehratensensors darstellt.

Bevorzugt ist eine Ausführungsform, bei der im Hinblick auf eine möglichst exakte relative und/oder absolute Position und/oder Winkellage der Entfernungsmessvorrichtung zur Stützung der Inertialsensorik mindestens ein weiterer Sensor, insbesondere ein Temperatursensor und/oder ein Magnetfeldsensor, vorzugsweise zum Messen des Erdmagnetfeldes, vorgesehen ist.

Zusätzlich oder alternativ zu einer Inertialsensorik ist es möglich, die Position und/oder Winkellage der Entfernungsmessvorrichtung satellitengestützt, beispielsweise durch Einsatz eines GPS-Empfängers mit einer entsprechenden Auswerteelektronik, zu bestimmen.

Zusätzlich oder alternativ ist es möglich, die Position der Entfernungsmessvorrichtung unter Zuhilfenahme mindestens einer externen Sende- und/oder Empfangseinheit zu bestimmen, mit der bevorzugt elektromagnetische Signale ausgesendet und/oder, empfangen werden, um somit die Position und/oder die Winkellage der Entfernungsmessvorrichtung bei jedem Entfernungsmessvorgang zu ermitteln. Bevorzugt ist jedoch eine Ausführungsform, bei der die Mittel zur Positions- und/oder Winkellagenbestimmung vollständig integraler Bestandteil der Entfernungsmessvorrichtung sind.

Besonders bevorzugt ist eine Ausführungsform der Entfernungsmessvorrichtung, bei der Mittel zum Übermitteln der Flächen- und/oder Raumkoordinaten von bestimmten Raumpunkten an mindestens einen. Empfänger vorgesehen sind. Dabei kann die Übermittlung drahtlos, beispielsweise mit Hilfe von Bluetooth, oder kabelgebunden, erfolgen. Bevorzugt ist dem Empfänger eine Datenverarbeitungseinrichtung zugeordnet, beispielsweise um die erfassten Raumkoordinaten, insbesondere grafisch, auszuwerten und/oder darzustellen.

In Weiterbildung der Erfindung ist mit Vorteil vorgesehen, dass die Entfernungsmessvorrichtung derart ausgebildet ist, dass sie den Benutzer bei der Findung eines Messpunktes (Raumpunktes) unterstützt und/oder ein Zittern der Hand des Benutzers kompensiert. Hierzu ist in Weiterbildung der Erfindung vorgesehen, dass mit Hilfe der Mittel zum Bestimmen der Flächen- und/oder Raumkoordinaten geometrische Merkmale des Raumes bestimmt, d. h. auf Basis von kontinuierlichen Messungen extrahiert werden. Dies kann beispielsweise durch einen Vergleich mehrerer Entfernungsmesswerte miteinander erfolgen. Ist zum Beispiel die Raumecke der gesuchte Messpunkt (Raumpunkt), so handelt es sich hierbei um den am weitesten entfernten Punkt bei einer Messung.

Von besonderem Vorteil ist eine Ausführungsform der Entfernungsmessvorrichtung, bei der diese eine Recheneinheit zum Berechnen von Strecken und/oder Flächen und/oder Volumina auf Basis der Raumkoordinaten aufweist. So kann beispielsweise der Flächeninhalt einer Fläche, insbesondere einer Wand, durch Definition von, insbesondere vier, Eckpunkte der Fläche als Messpunkte (Raumpunkte) erfolgen. Ebenso kann das Volumen eines Raumes durch die Definition von beispielsweise acht Eckpunkten als Messpunkte (Raumpunkte) erfolgen.

Als eigenständige Erfindung soll eine Entfernungsmessvorrichtung mit einem an einem Pendel angeordneten Drehratensensor offenbart gelten. Bevorzugt - jedoch nicht zwingend - umfasst eine derartig ausgebildete Entfernungsmessvorrichtung wie zuvor beschrieben ausgebildete Mittel, mit denen jedem Raumpunkt Flächenkoordinaten und/oder Raumkoordinaten in einem zweidimensionalen oder dreidimensionalen, insbesondere raumfesten, Koordinatensystem zuordenbar sind, wobei ein derartig ausgebildeter Drehratensensor dann Bestandteil dieser Mittel, insbesondere Bestandteil von Sensormitteln dieser Mittel, ist. Durch die Anordnung des Drehratensensors an einem Pendel bzw. die Ausbildung des Drehratensensors als Pendel lässt sich die Anzahl der notwendigen Drehratensensoren auf einen einzigen reduzieren, wobei der Drehratensensor die Drehrate um die (immer) zum Erdmittelpunkt zeigende Pendelachse misst. Besonders bevorzugt ist eine Ausführungsform, bei der das Pendel eine in einem Fluid, beispielsweise in Öl, gelagerte Kugel ist, wobei die Kugel mit Vorteil in einem Bereich beschwert ist, so dass sich die Kugel automatisch an der Lotrechten ausrichtet. Der Drehratensensor befindet sich dabei bevorzugt innerhalb der Kugel. Die Energieversorgung und Kommunikation mit dem Drehratensensor kann dabei beispielsweise induktiv über Induktionselemente außerhalb der Flüssigkeitslagerung des Drehratensensors erfolgen.

Die Erfindung führt auch auf ein System mit einer Entfernungsmessvorrichtung und einer Logikeinheit, die derart ausgebildet ist, dass mit ihr die von der Entfernungsmessvorrichtung bestimmten Raumkoordinaten von Raumpunkten in ein grafisches Raummodell umwandelbar sind. Bevorzugt handelt es sich dabei um ein Raumgitter. Bei der Logikeinheit kann es sich beispielsweise um einen PersonalComputer mit CAD-Software handeln.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische Darstellung einer Entfernungsmessvorrichtung,
- Fig. 2a bis Fig. 2d:: mehrere Schritte einer möglichen Vorgehensweise zur Bestimmung der Raumkoordinaten von vier Raumpunkten und
- Fig. 3:: eine schematische Darstellung eines an einem Pendel angeordneten Drehratensensors.

### Ausführungsformen der Erfindung

In den Figuren sind gleiche Bauteile und Bauteile mit der gleichen Funktion mit den gleichen Bezugszeichen gekennzeichnet.

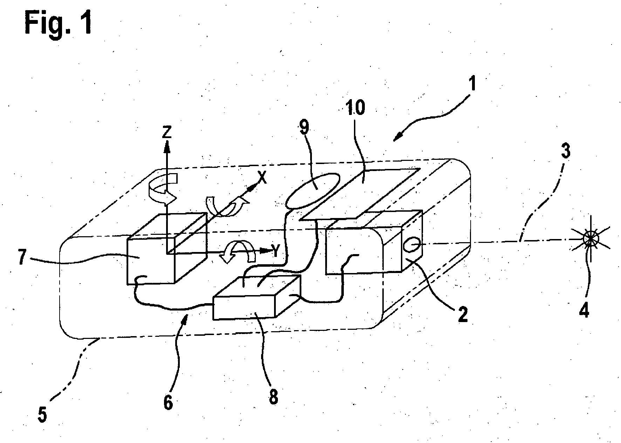

In Fig. 1 ist schematisch eine als Handgerät ausgebildete Entfernungsmessvorrichtung 1 gezeigt. Diese umfasst Messmittel 2 zum Bestimmen von Entfernungen zu Raumpunkten. In dem gezeigten Ausführungsbeispiel umfassen die Messmittel 2 nicht näher bezeichnete Sende- und Empfangsmittel zum Aussenden eines Messsignals 3 und zum Empfangen des an einem Raumpunkt 4 reflektierten Messsignals. Die Messmittel 2, insbesondere eine Recheneinheit, bestimmen die Entfernung zwischen der Entfernungsmessvorrichtung 1 und dem Raumpunkt 4, beispielsweise über eine Laufzeitmessung und/oder über interferometrische Methoden.

Innerhalb eines Gehäuses 5 der Entfernungsmessvorrichtung 1 sind Mittel 6 zum Bestimmen von Flächenkoordinaten und/oder Raumkoordinaten des Raumpunktes 4 in einem zweidimensionalen bzw. dreidimensionalen, raumfesten, einheitlichen Koordinatensystem angeordnet. Die Mittel 6 umfassen hierzu lediglich schematisch angedeutete, als Inertialsensorik ausgebildete Sensormittel 7, mit denen die Position sowie die Winkellage der Entfernungsmessvorrichtung 1 im Raum (zu jedem Zeitpunkt) bestimmbar ist. Insbesondere umfassen die Sensormittel hierzu drei nicht näher dargestellte Beschleunigungssensoren zum Bestimmen von translatorischen Positionsänderungen entlang einer X-Achse, entlang einer Y-Achse und, entlang einer Z-Achse sowie drei Drehratensensoren zum Bestimmen von Winkellagenänderungen um die X-Achse, die Y-Achse und die Z-Achse. Des Weiteren umfassen die Mittel 6 eine Logikeinrichtung 8, die sowohl signalleitend mit den Messmittel 2 als auch mit den Sensormitteln 7 verbunden ist. Ferner ist die Logikeinrichtung 8 signalleitend mit Eingabemitteln 9 verbunden. Darüber hinaus umfasst die Entfernungsmessvorrichtung 1 ein Display 10, auf dem sowohl gemessene Entfernungen als auch Raumkoordinaten anzeigbar sind.

Zum Messen von Raumkoordiriaten mehrerer Raumpunkte wird dabei bevorzugt wie folgt vorgegangen: An einer beliebigen Startposition werden die Mittel 6, vorzugsweise durch Betätigen der Eingabemittel 9, initialisiert und gleichzeitig wird die Entfernung zu einem ersten Raumpunkt gemessen, wobei die Startposition und die Startwinkellage als Vergleichswerte festgelegt werden. Daraufhin wird die Entfernungsmessvorrichtung 1 im Raum bewegt, wobei sowohl die Positionsänderung als auch die Winkellagenänderung der Entfernungsmessvorrichtung 1 im Raum mit Hilfe der Sensormittel 7 ermittelt wird. Durch erneutes Betätigen der Eingabemittel 9 wird die Entfernung zu einem zweiten Raumpunkt gemessen, wobei gleichzeitig mit Hilfe der Sensormittel 7 die aktuelle Position sowie die aktuelle Winkellage zur Entfernungsmessvorrichtung 1 zum Messzeitpunkt ermittelt wird. Die Ermittlung der Positionsänderung und Winkellageriänderung erfolgt dabei relativ zu der durch Initialisieren festgelegten Startposition und Startwinkellage. Auf Basis der durch Ermitteln der Positionsänderung und Winkellageänderung berechneten Position und Winkellage zum Messzeitpunkt und unter Berücksichtigung der gemessenen Entfernung zu dem zweiten Raumpunkt berechnet die Logikeinrichtung 8 die Raumkoordinaten des zweiten Raumpunktes. Zur Bestimmung der Raumkoordinaten weiterer Raumpunkte wird analog vorgegangen, wobei mittels der Sensormittel laufend Positionsänderungen relativ zur startposition und zur Startwinkellage oder zur jeweils zuletzt ermittelten Position oder Winkellage erfasst werden.

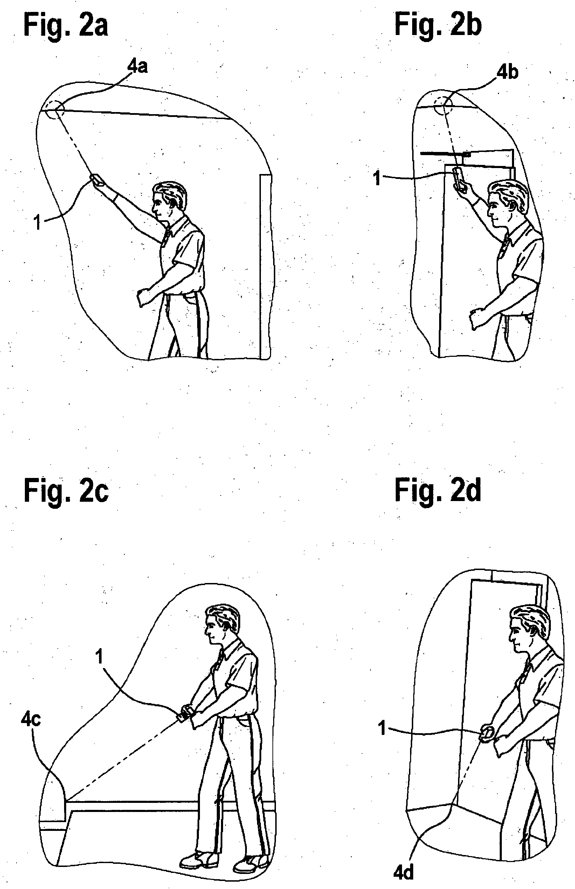

In den Fig. 2a bis 2d ist die Vorgehensweise zur Bestimmung der Raumkoordinaten von vier Raumpunkten 4a, 4b, 4c und 4d gezeigt. Zu Beginn der Messungen werden die Sensormittel 7 gemäß Fig. 2a durch Betätigen von Eingabemitteln 9 (vgl. Fig. 1) initialisiert, und gleichzeitig wird die Entfernung zum Raumpunkt 4a gemessen. Daraufhin wird die Position und die Winkellage der Entfernungsmessvorrichtung 1 geändert (vgl. Fig. 2b), und es wird die Entfernung zum Raumpunkt 4b durch Betätigen der Eingabemittel 9 gemessen, wobei diesem Entfernungsmesswert die aktuelle Position und Winkellage der Entfernungsmessvorrichtung 1, die mit Hilfe von Sensormitteln 7 erfasst wurden, zugeordnet werden. Auf Basis dieser Zuordnung erfolgt die Raumkoordinatenermittlung. Daraufhin wird die Entfernungsmessvorrichtung 1 weiter verstellt, so dass sich deren Position und Winkellage erneut ändert (vgl. Fig. 2c). Dennoch wird die Entfernung zum Raumpunkt 4c gemessen und gleichzeitig die Position und Winkellage der Entfernungsmessvorrichtung 1 zum Messzeitpunkt ermittelt (vgl. Fig. 2c), woraufhin analog zur Bestimmung der Raumkoordinaten des Raumpunktes 4d (vgl. Fig. 2d) vorgegangen wird.

Alternativ zu der zuvor beschriebenen Vorgehensweise, bei der nur dann eine Entfernungsmessung stattfindet, wenn unmittelbar ein Raumpunkt 4a bis 4d anvisiert wird bzw. Eingabemittel betätigt werden, ist eine Ausführungsform realisierbar, bei der die Messmittel 2 der Entfernungsmessvorrichtung 1 kontinuierlich Entfernungen messen und den Messwerten bei Bedarf jeweils die aktuelle Position und/oder Winkellage der Entfernungsmessvorrichtung 1 zugeordnet wirel.

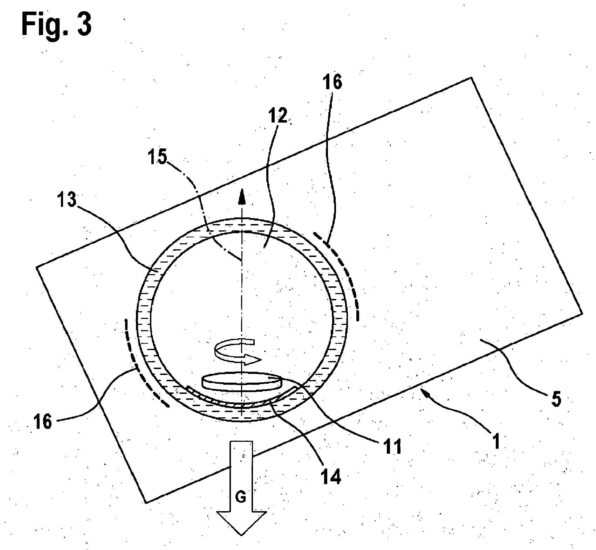

In Fig. 3 ist eine Entfernungsmessvorrichtung 1 mit einem Gehäuse 5 gezeigt. Auf die Darstellung der Messmittel sowie einer Logikeinheit wurde aus Übersichtlichkeitsgründen verzichtet. Zum Bestimmen der Winkellage der Entfernungsmessvorrichtung und/oder eines Entfernungsmesssignals relativ zu einem Vergleichswert umfasst die Entfernungsmessvorrichtung 1 einen Drehratensensor 11, der in ein als Kugel ausgebildetes Pendelelement 12 integriert ist. Das Pendelelement 12 ist in dem gezeigten Ausführungsbeispiel in einer Fluidkammer 13, die mit Öl gefüllt ist, gelagert, wobei das kugelförmige Pendelelement 12 mit Hilfe eines Gewichtes 14 einseitig beschwert ist, so dass sich das Pendelelement 12 automatisch derart ausrichtet, dass eine Messachse 15, um die die Drehrate bestimmt werden soll, lotrecht ausgerichtet ist. Anders ausgedrückt kann mit Hilfe des Drehratensensors 11 die Drehrate in Bezug auf die Lotrechte bestimmt werden. Zur Energieversorgung und Messdatenübermittlung sind am Außenumfang der Fluidkammer 13 Induktionselemente 16 angeordnet. Mit Hilfe des gezeigten Drehratensensors 11 sind auch dann Flächenwinkel messbar, wenn die Entfernungsmessvorrichtung 1, wie in Fig. 3 gezeigt ist, schräg gestellt ist.

## Patentansprüche

1. Handgehaltene Entfernungsmessvorrichtung, mit Messmitteln (2) zum Bestimmen von Entfernungen zu Raumpunkten (4, 4a, 4b, 4c, 4d), wobei Mittel (6) vorgesehen sind, mit denen jedem Raumpunkt (4, 4a, 4b, 4c, 4d) Flächenkoordinaten und/oder Raumkoordinaten in einem zweidimensionalen oder dreidimensionalen Koordinatensystem zuordenbar sind, **dadurch gekennzeichnet, dass** die Mittel (6) Sensormittel (7) umfassen, mit denen die Position und/oder die Winkellage der Entfernungsmessvorrichtung (1) in einer Fläche und/oder im Raum, insbesondere relativ zu mindestens einem Vergleichswert, im Messzeitpunkt erfassbar sind, wobei die Sensormittel (7) mindestens einen, insbesondere dreiachsigen, Beschleunigungssensor und mindestens einen, vorzugsweise dreiachsigen, Drehratensensor (11) umfassen, sodass unter Berücksichtigung der gemessenen Entfernung und den gemessenen Position und/oder Winkellage der Entfernungsmessvorrichtung die Koordinaten eines Raumpunktes (4, 4a, 4b, 4c, 4d) bestimmbar sind.

2. Entfernungsmessvorrichtung nach Anspruch 1, **dadurch gekennzeichnet, dass** die Mittel (6) die Flächenkoordinaten und/oder die Raumkoordinaten eines Raumpunktes (4, 4a, 4b, 4c, 4d) auf Basis der Position und/oder der Winkellage der Entfernungsmessvorrichtung (1) in der Fläche oder im Raum zum Zeitpunkt der Entfernungsbestimmung berechnend ausgebildet sind.

3. Entfernungsmessvorrichtung nach einem der Ansprüche 1 oder 2, **dadurch gekennzeichnet, dass** die Sensormittel (7) zum Erfassen des Betrages und/oder der Richtung einer translatorischen und/oder rotatorischen Positions- und/oder Winkellageänderungen der Entfernungsmessvorrichtung (1) ausgebildet sind.

4. Entfernungsmessvorrichtung nach Anspruch 3, **dadurch gekennzeichnet, dass** die Sensormittel (7) eine Inertialsensorik umfassen.

5. Entfernungsmessvorrichtung nach einem der vorhergehenden Ansprüche, **dadurch gekennzeichnet, dass** die Sensormittel (7) mindestens einen Temperatursensor und/oder mindestens einen Magnetfeldsensor umfassen.

6. Entfernungsmessvorrichtung nach einem der vorhergehenden Ansprüche, **dadurch gekennzeichnet, dass** die Mittel (6) zur satellitengestützten Bestimmung der Position und/oder der Lage der Entfernungsmessvorrichtung (1) in der Fläche oder im Raum ausgebildet sind.

7. Entfernungsmessvorrichtung nach einem der vorhergehenden Ansprüche, **dadurch gekennzeichnet, dass** die Mittel (6) zum Zusammenwirken mit externen, mindestens eine Sende- und/oder Empfangseinheit, vorzugsweise zum Aussenden bzw. Empfangen mindestens eines elektromagnetischen Signals, aufweisenden, Mitteln (6) zur Positions- und/oder Lagebestimmung ausgebildet sind.

8. Entfernungsmessvorrichtung nach einem der vorhergehenden Ansprüchen, **dadurch gekennzeichnet, dass** Sendemittel zum Übermitteln der Raumkoordinaten an mindestens einen Empfänger vorgesehen sind.

9. Entfernungsmessvorrichtung, nach einem der vorhergehenden Ansprüche, **dadurch gekennzeichnet, dass** die Mittel (6) zum Bestimmen von Raummerkmalen, auf Basis einer quasi-kontinuierlichen Entfernungsmessung, insbesondere beim Anvisieren eines Raumpunktes (4, 4a, 4b, 4c, 4d), ausgebildet sind.

10. Entfernungsmessvorrichtung nach einem der vorhergehenden Ansprüche, **dadurch gekennzeichnet, dass** eine Recheneinheit zum Berechnen von Strecken und/oder Flächen und/oder Volumina auf Basis der ermittelten Raumkoordinaten vorgesehen ist.

11. Entfernungsmessvorrichtung, nach einem der Ansprüche 1 bis 10, **dadurch gekennzeichnet, dass** die Sensormittel (7), einen an und/oder in einem sich automatisch an der Lotrechten orientierenden Pendelelement (12) angeordneten Drehratensensor (11) umfassen.

12. System mit einer Entfernungsmessvorrichtung (1) nach einem der vorhergehenden Ansprüche und einer Logikeinheit, die die Raumkoordinaten in ein graphisches, insbesondere als Raumgitter ausgebildetes, Raummodell umwandelnd ausgebildet ist.

## Claims

1. Hand-held distance measuring device, having measuring means (2) for determining distances to spatial points (4, 4a, 4b, 4c, 4d), means (6) being provided with which each spatial point(4, 4a, 4b, 4c, 4d) can be assigned surface coordinates and/or spatial coordinates in a two-dimensional or three-dimensional coordinate system, **characterized in that** the means (6) comprise sensor means (7) with which the position and/or the angular position of the distance measuring device (1) in a surface and/or in space, in particular relative to at least one comparative value, can be measured at the measurement time, the sensor means (7) comprising at least one, in particular three-axis, acceleration sensor and at least one, preferably three-axis, rate of rotation sensor (11), so that, taking into account the measured distance and the measured position and/or angular position of the distance measuring device, the coordinates of a spatial point (4, 4a, 4b, 4c, 4d) can be determined.

2. Distance measuring device according to Claim 1, **characterized in that** the means (6) are designed to calculate the surface coordinates and/or the spatial coordinates of a spatial point (4, 4a, 4b, 4c, 4d) on the basis of the position and/or the angular position of the distance measuring device (1) in the surface or in space at the time of the distance determination.

3. Distance measuring device according to either of Claims 1 and 2, **characterized in that** the sensor means (7) are designed to measure the magnitude and/or the direction of a translational and/or rotational position and/or changes in the angular position of the distance measuring device (1).

4. Distance measuring device according to Claim 3, **characterized in that** the sensor means (7) comprise inertial sensors.

5. Distance measuring device according to one of the preceding claims, **characterized in that** the sensor means (7) comprise at least one temperature sensor and/or at least one magnetic field sensor.

6. Distance measuring device according to one of the preceding claims, **characterized in that** the means (6) are designed for the satellite-assisted determination of the position and/or the orientation of the distance measuring device (1) in the surface or in space.

7. Distance measuring device according to one of the preceding claims, **characterized in that** the means (6) are designed to interact with external means (6) for determining position and/or orientation, having at least one transmitting and/or receiving unit, preferably for transmitting and receiving at least one electromagnetic signal.

8. Distance measuring device according to one of the preceding claims, **characterized in that** transmitting means are provided to transmit the spatial coordinates to at least one receiver.

9. Distance measuring device according to one of the preceding claims, **characterized in that** the means (6) are designed to determine spatial features on the basis of a quasi-continuous distance measurement-, in particular when aiming at a spatial point(4, 4a, 4b, 4c, 4d).

10. Distance measuring device according to one of the preceding claims, **characterized in that** a computing unit is provided to calculate distances and/or areas and/or volumes on the basis of the spatial coordinates determined.

11. Distance measuring device according to one of Claims 1 to 10, **characterized in that** the sensor means (7) comprise a rate of rotation sensor (11) arranged on and/or in a pendulum element (12) orienting itself automatically with the vertical.

12. System having a distance measuring device (1) according to one of the preceding claims and a logic unit, which is designed to convert the spatial coordinates into a graphical spatial model, in particular formed as a spatial grid.

## Revendications

1. Dispositif de télémétrie portatif, comprenant des moyens de mesure (2) destinés à déterminer des distances par rapport à des points dans l'espace (4, 4a, 4b, 4c, 4d), des moyens (6) étant présents à l'aide desquels des coordonnées dans le plan et/ou des coordonnées spatiales dans un système de coordonnées bidimensionnel ou tridimensionnel peuvent être associées à chaque point dans l'espace (4, 4a, 4b, 4c, 4d), **caractérisé en ce que** les moyens (6) comprennent des moyens de détection (7) avec lesquels la position et/ou la position angulaire du dispositif de télémétrie (1) dans un plan et/ou dans l'espace peuvent être détectées à l'instant de la mesure, notamment par rapport à au moins une valeur comparative, les moyens de détection (7) comprenant au moins un capteur d'accélération, de préférence à trois axes, et au moins un capteur de vitesse de rotation (11), de préférence à trois axes, de sorte que les coordonnées d'un point dans l'espace (4, 4a, 4b, 4c, 4d) puissent être déterminées en tenant compte de la distance mesurée et de la position et/ou position angulaire mesurées du dispositif de télémétrie.

2. Dispositif de télémétrie selon la revendication 1, **caractérisé en ce que** les moyens (6) sont configurés pour calculer les coordonnées dans le plan et/ou les coordonnées spatiales d'un point dans l'espace (4, 4a, 4b, 4c, 4d) en se basant sur la position et/ou la position angulaire du dispositif de télémétrie (1) dans le plan ou dans l'espace à l'instant de la détermination de la distance.

3. Dispositif de télémétrie selon l'une des revendications 1 ou 2, **caractérisé en ce que** les moyens de détection (7) sont configurés pour détecter la valeur et/ou la direction d'une modification translatoire et/ou rotative de la position et/ou de la position angulaire du dispositif de télémétrie (1).

4. Dispositif de télémétrie selon la revendication 3, **caractérisé en ce que** les moyens de détection (7) comprennent un système de détection inertiel.

5. Dispositif de télémétrie selon l'une des revendications précédentes, **caractérisé en ce que** les moyens de détection (7) comprennent au moins une sonde de température et/ou au moins un capteur de champ magnétique.

6. Dispositif de télémétrie selon l'une des revendications précédentes, **caractérisé en ce que** les moyens (6) sont configurés pour la détermination assistée par satellite de la position et/ou de la posture du dispositif de télémétrie (1) dans le plan ou dans l'espace.

7. Dispositif de télémétrie selon l'une des revendications précédentes, **caractérisé en ce que** les moyens (6) sont configurés pour coopérer avec des moyens (6) externes, possédant au moins une unité d'émission et/ou de réception, de préférence destinée à émettre ou à recevoir au moins un signal électromagnétique, en vue de déterminer la position et/ou la posture.

8. Dispositif de télémétrie selon l'une des revendications précédentes, **caractérisé en ce que** les moyens d'émission sont conçus pour communiquer les coordonnées spatiales à au moins un récepteur.

9. Dispositif de télémétrie selon l'une des revendications précédentes, **caractérisé en ce que** les moyens (6) sont configurés pour déterminer des caractéristiques spatiales sur la base d'une télémétrie quasi-continue, notamment lors de la visée d'un point dans l'espace (4, 4a, 4b, 4c, 4d).

10. Dispositif de télémétrie selon l'une des revendications précédentes, **caractérisé en ce qu'**il existe une unité de calcul destinée à calculer des tronçons et/ou des surfaces et/ou des volumes sur la base des coordonnées spatiales déterminées.

11. Dispositif de télémétrie selon l'une des revendications 1 à 10, **caractérisé en ce que** les moyens de détection (7) comprennent un capteur de vitesse de rotation (11) disposé sur et/ou dans un élément suspendu (12) qui s'oriente automatiquement sur la verticale.

12. Système comprenant un dispositif de télémétrie (1) selon l'une des revendications précédentes et une unité logique, lequel est configuré pour convertir les coordonnées spatiales en un modèle spatial graphique, notamment réalisé sous la forme d'une grille dans l'espace.
